# EUROPÄISCHE PATENTSCHRIFT

(11) **EP 0 816 772 B1**
(45) Veröffentlichungstag und Bekanntmachung des Hinweises auf die Patenterteilung: **19.11.2003**
(21) Anmeldenummer: 97111005.1
(22) Anmeldetag: 02.07.1997
(51) Int. Cl.: F24F 13/06

(54) **Luftauslass**
Air outlet
Sortie d'air

(30) Priorität: 04.07.1996 DE 19626884
(43) Veröffentlichungstag der Anmeldung: 07.01.1998
(73) Patentinhaber: Schako Klima Luft Ferdinand Schad KG, 78600 Kolbingen (DE)
(72) Erfinder: Müller, Gottfried, 78600 Kolbingen (DE)
(74) Vertreter: Weiss, Peter, Dr. rer. nat.

(56) Entgegenhaltungen:
- EP-A- 0 068 448
- EP-A- 0 639 744
- EP-A- 0 648 984
- DE-A- 19 543 686
- US-A- 4 966 069

## Beschreibung

Die Erfindung betrifft einen Luftauslaß zum Einbringen von warmer und/oder kalter Luft in einen Raum mit einem länglich ausgebildeten und stirnwärtig zumindest mit einer Öffnung versehenen Gehäuse, welchem zumindest eine Auslaßeinrichtung zugeordnet und neben der Auslasseinrichtung wenigstens ein weiterer Auslass angeordnet ist.

Derartige Luftauslässe sind in vielfältiger Form und Ausführung auf dem Markt erhältlich. Sie dienen dazu, Luft, welche über Kanalsysteme bzw. Luftzuführsysteme transportiert wird, in einen Raum einzubringen. Insbesondere sind Auslässe bekannt, welche beispielsweise als Schlitzauslässe in Rohre oder Rohrleitungsabschnitte eingesetzt werden. Diese weisen Schlitzschieber, Lamellen od. dgl. Elemente auf, um eine Strömung zu beeinflussen und abzulenken.

Nachteilig an herkömmlichen Luftauslässen ist, daß diese in unterschiedliche Rohre nur ungenau eingesetzt werden können. Für Rohre mit unterschiedlichen Durchmessern müssen entsprechende verschiedene Auslässe hergestellt werden, was teuer ist. Ein universeller Einsatz ist bisher nicht möglich.

Werden höhere Austrittsgeschwindigkeiten bzw. höhere Volumenströme aus herkömmlichen Auslässen ausgebracht, so kommt es auch zu unerwünschten Zugerscheinungen und einer Erhöhung des Geräuschpegels. Ferner ist nachteilig, daß Auslässe, welche hohe Volumenströme zugfrei in einen Raum einbringen können, kompliziert und komplex aufgebaut sind.

Ein Luftauslaß der o. g. Art ist aus der EP-A-648 984 bekannt. Dort wird ein Luftauslaß zum Einsetzen in ein Luftführungssystem mit Schlitzen in einem Rohrabschnitt beschrieben, wobei den Schlitzen im Inneren des Rohrabschnitts eine Schlitzschieberanordnung vorgeschaltet ist. Der Bereich neben den Schlitzen ist lochblechartig ausgestaltet.

Der vorliegenden Erfindung liegt die Aufgabe zugrunde, einen Luftauslaß zu schaffen, welcher die o. g. Nachteile beseitigt, mit welchem Frischluft weit in einen Raum in beliebige Richtungen eingebracht werden kann, ohne daß Zugerscheinungen auftreten oder Geräusche entstehen. Auch soll ein Aufheizen eines Raumes sehr schnell bei guter Durchmischung mit der Raumluft ohne Zugerscheinungen möglich sein. Ferner sollen Herstellungs-, Wartungs- und Montagekosten reduziert werden.

Zur Lösung dieser Aufgabe führt, daß die Auslaßeinrichtung in eine in Längsrichtung verlaufende Öffnung des Gehäuses eingesetzt ist und eine Mehrzahl von nebeneinander angeordneten und verschwenkbaren Auslaßdüsen aufweist.

Durch diese Anordnung tritt Luft aus den seitlichen Auslässen und wird von dem aus den Düsen austretenden Luftstrom mitgenommen. Die nebeneinander angeordneten und verschwenkbaren Düsen lassen einen einstellbaren Stützstrahl in den Raum ausströmen. Dieser Stützstrahl nimmt die aus den Auslässen bzw. Lochblechen quellende Luft mit in die jeweils gewünschte und eingestellte Richtung, so daß eine hervorragende Durchmischung der Raumluft erzielt wird.

Die Auslässe können streifenförmig, länglich und in einem geringen Abstand parallel neben der Auslaßeinrichtung angeordnetet sein.

Eine besonders wirkungsvolle Ausgestaltung des Luftauslasses ist dann gegeben, wenn die Auslässe als Lochbleche in das Gehäuse eingesetzt oder aus dem Gehäuse ausgestanzt sind, wobei die einzelnen Öffnungen unterschiedlichste Formen und Größen aufweisen können.

Der Rohrabschnitt mit den Auslässen kann dann leicht in ein herkömmliches Luftkanalsystem eingesetzt und dieses somit nachgerüstet werden, ohne daß hohe Montagekosten entstehen. Dabei kann das Gehäuse bzw. das Rohr unterschiedliche Querschnitte aufweisen, wie beispielsweise runde, ovale, dreieckige oder vieleckige Querschnittsformen.

In ein Rohr können auch mehrere Auslaßeinrichtungen mit daneben angeordneten Auslässen eingesetzt werden, wobei diese in unterschiedlichen Winkeln zueinander im Rohr angeordnet sind. So lassen sich ganz bestimmte gewünschte Ausstrahlrichtungen definieren, um möglichst viel Luft in ganz bestimmte Bereiche eines Raumes auszubringen. Gerade auch im Heizfall ist dies von großer Bedeutung, da Luft durch die Düsen der Auslaßeinrichtungen weit in einen Raum eingebracht wird, wobei die aus den Auslässen, insbesondere Lochblechen, quellende Luft mitgenommen wird und eine Durchmischung mit der übrigen Raumluft erheblich verbessert ist.

Auch als Endabschnitt kann dieses Rohr einem Kanalsystem angeschlossen werden, wobei dann eine der beiden Öffnungen des Rohres geschlossen ist.

Eine Begrenzung des Volumenstromes der Auslasseinrichtung ist hier ebenfalls möglich, wenn beispielsweise Schlitzschieber den Düsen vorgeschaltet sind, um stufenlos den auszubringenden Volumenstrom zu regeln. Hier sollen jedoch auch andere Möglichkeiten der Regelung, wie beispielsweise Klappen od. dgl. Elemente, im Rahmen der Erfindung liegen.

Ein weiterer Vorteil der Erfindung ist, daß Aufheizzeiten durch diese Anordnung von Auslaßeinrichtungen mit daneben angeordneten Lochblechen erheblich bei Vermeidung von Zugerscheinungen reduziert und zudem Energiekosten gespart werden können, da die aus den Lochblechen austretende Luft von den Stützstrahlen der Auslaßeinrichtung mitgenommen wird.

Durch unterschiedlich breit ausgebildete Auslässe läßt sich ein ausquellender Volumenstrom bestimmen. Seine Austrittscharakteristik ist auch durch einen bestimmten Abstand zwischen Auslaßeinrichtung und den Auslässen veränderbar.

Insgesamt ist ein Luftauslaß geschaffen, welcher eine vielfältige Möglichkeit der Luftregelung durch unterschiedliche Anordnungen der Auslaßeinrichtungen und Auslässe in einem Gehäuse bzw. Rohr zuläßt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf einen erfindungsgemäßen Luftauslaß mit Auslaßeinrichtung;
Figur 2 einen Querschnitt durch den Luftauslaß gemäß Figur 1 entlang Linie II-II;
Figur 3 einen Querschnitt durch ein weiteres Ausführungbeispiel des Luftauslasses gemäß Figur 1;
Figur 4 einen Querschnitt durch den Luftauslaß gemäß Figur 1 als weiteres Ausführungsbeispiel;
Figur 5 einen Querschnitt durch einen weiteren Luftauslaß mit querschnittlichem Rechteckprofil.

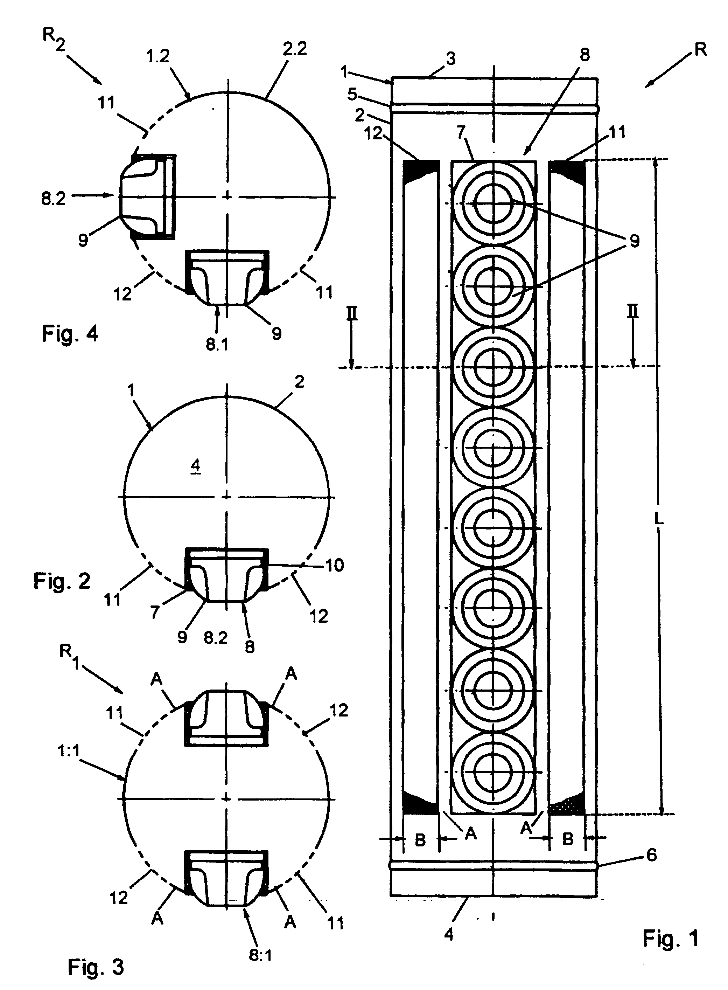

Gemäß Figur 1 weist ein erfindungsgemäßer Luftauslaß R ein Gehäuse 1 auf, welches im bevorzugten Ausführungsbeispiel querschnittlich als Rohr 2 ausgebildet ist. Dabei liegt das Rohr 2 als Rohrabschnitt vor und ist beidseits mit Öffnungen 3, 4 versehen. Wahlweise kann die eine oder andere Öffnung 3, 4 durch hier nicht dargestellte Elemente, beispielsweise Klappen oder Deckel, verschlossen werden.

Nahe den Öffnungen 3, 4 sind in das Rohr 2 umlaufende Rastnuten 5 und 6 eingeformt. Diese dienen zum Anschließen an ein herkömmliches Kanal- bzw. Klimasystem, an dem das Rohr 2 wiederlösbar festgelegt wird.

Das Rohr 2 weist eine in Längsrichtung verlaufende längliche Öffnung 7 auf. In diese Öffnung 7 ist eine Auslaßeinrichtung 8 eingesetzt. Diese weist eine Mehrzahl von nebeneinander angeordneten Auslaßdüsen 9 auf, welche, wie in Figur 2 dargestellt, in einer Halterung 10 gelagert sind. Bevorzugt sind diese Auslaßdüsen 9 kalottenartig und drehbar in der Halterung 10 gelagert, so daß jede gewünschte Strahlrichtung durch Einstellen der Düsen wählbar ist.

Zumindest einseitig sind neben der Auslaßeinrichtung 8 Auslässe 11, 12 vorgesehen. Diese Auslässe 11, 12 sind streifenartig als Lochblech in das Rohr eingesetzt oder in das Rohr 2 eingestanzt. Sie verlaufen parallel und gering beabstandet zu der Auslaßeinrichtung 8 und sind von gleicher Länge L. Wie aus Figur 2 ersichtlich, passen sich die Auslässe 11, 12 der Kontür bzw. dem querschnittlichen Verlauf des Rohres 2 an.

Damit eine Ausblascharakteristik dieses Luftauslasses R auf entsprechende Anforderungen eingestellt werden kann, liegt im Rahmen der Erfindung, die Breite B der Auslässe 11, 12 zu verändern. Auch ein Verändern eines Abstandes A zwischen der Auslaßeinrichtung 8 und den Auslässen 11 oder 12 kann der Erzeugung unterschiedlicher Auslaßcharakteristiken dienen.

In einem weiteren Ausführungsbeispiel der vorliegenden Erfindung gemäß Figur 3 sind in ein Gehäuse 1.1 eines Luftauslasses R₁, welches als Rohr 2.1 ausgebildet ist, achsensymmetrisch in Längsrichtung des Rohres 2.1 zwei Auslaßeinrichtungen 8.1 und 8.2 gegenüberliegend in das Rohr 2. 1 eingesetzt. An diese Auslaßeinrichtungen 8.1 und 8.2 des Rohres 2.1 schließen sich seitlich und bevorzugt parallel in Längsrichtung verlaufend, wie oben beschrieben, die Auslässe 11 und 12 an. Diese halten einen Abstand A zu den Auslaßeinrichtungen 8.1, 8.2 ein.

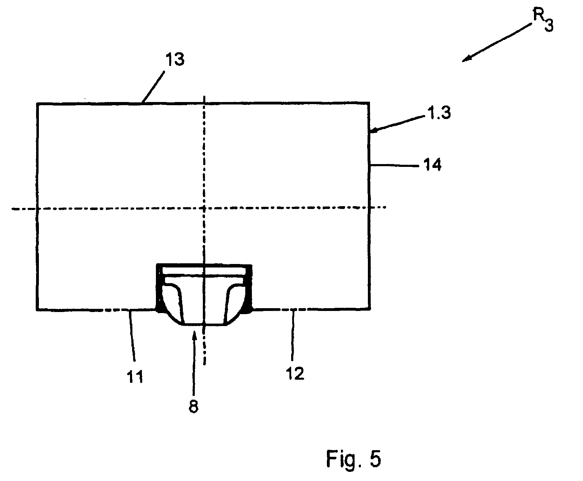

In Figur 4 ist ein Luftauslaß R₂ dargestellt, welchem ebenfalls zwei Auslaßeinrichtungen 8.1, 8.2 in oben beschriebener Weise und Auslässe 11 und 12 zugeordnet sind. Die Besonderheit dieses Ausführungsbeispiels ist die Anordnung beider Auslaßeinrichtungen 8, welche im Gehäuse 1.2 bzw. im Rohr 2.2 rechtwinklig zueinander eingesetzt sind. Entsprechend sind die Auslässe 11 und 12 in Längsrichtung neben diesen angeordnet.

Mit diesem Luftauslaß R₂ sind eine Vielzahl von verschiedensten Auslaßcharakteristiken möglich, wenn beispielsweise die einzelnen Düsen 9 jeweils nach außen oder nach innen gerichtet sind.

Ggf. können mehrere Auslaßeinrichtungen 8, bevorzugt in Längsrichtung, in das Rohr 2 eingesetzt sein können, um möglichst vielseitige Auslaßcharakteristiken zu erzielen.

Ein weiteres Ausführungsbeispiel eines Luftauslasse R₃ zeigt Figur 5. Dort ist in ein querschnittlich rechteckförmiges Gehäuse 1.3 die Auslaßeinrichtung 8 in Längsrichtung des Gehäuses 1.3 eingesetzt. Dieses Gehäuse 1.3 kann an ein Kanalsystem angeschlossen werden, um Luft aus der Auslaßeinrichtung 8 und den daneben parallel verlaufend angeordneten Auslässen 11 und 12 auszubringen. Auch hier ist denkbar, mehrere, ggf. auch nebeneinander liegende Auslasseinrichtungen 8 in das Gehäuse 1.3 einzusetzen, um gewünschte Ausströmungsrichtungen zu erhalten. Dabei können mehrere Auslaßeinrichtungen 8 auch in den Seitenwänden 13, 14 in oben beschriebener Weise eingesetzt sein. Es sind hier viele Möglichkeiten denkbar, um bestimmte Kombinationen von Auslaßeinrichtungen mit Auslässen in den unterschiedlichen Seitenwänden vorzusehen.

Vom vorliegenden Erfindungsgedanken soll auch umfaßt sein, daß in andere querschnittliche Gehäuseformen, wie beispielsweise ovale, dreieck- bis vieleckartige Kanalsysteme, die erfindungsgemäßen Auslaßeinrichtungen mit entsprechenden Auslässen eingesetzt sein können.

## Patentansprüche

1. Luftauslaß zum Einbringen von warmer und/oder kalter Luft in einen Raum mit einem länglich ausgebildeten und stirnwärtig zumindest mit einer Öffnung (3, 4) versehenen Gehäuse (1, 1.1 - 1.3), welchem zumindest eine Auslaßeinrichtung (8) zugeordnet und neben der Auslasseinrichtung (8) wenigstens ein weiterer Auslass (11, 12) angeordnet ist,
**dadurch gekennzeichnet,**
**daß** die Auslaßeinrichtung (8) in eine in Längsrichtung verlaufende Öffnung (7) des Gehäuses (1, 1.1 - 1.3) eingesetzt ist und eine Mehrzahl von nebeneinander angeordneten und verschwenkbaren Auslaßdüsen (9) aufweist.

2. Luftauslaß nach Anspruch 1, **dadurch gekennzeichnet, daß** die Auslaßeinrichtung (8) und die Auslässe (11 und 12) eine gleiche Länge (L) aufweisen.

3. Luftauslaß nach Anspruch 1 oder 2, **dadurch gekennzeichnet, daß** der Auslaßeinrichtung (8) oder den Auslaßdüsen (9) Elemente zum Begrenzen der Luftströmung zugeordnet sind.

## Claims

1. Air outlet for introducing warm and/or cold air into a room, said outlet having an elongate housing (1, 1.1 - 1.3) provided with at least one opening (3, 4) at the ends, with which housing at least one outlet means (8) is associated, and at least one additional outlet (11, 12) is disposed adjacent the outlet means (8) , **characterised in that** the outlet means (8) is inserted into a longitudinally extending opening (7) of the housing (1, 1.1 - 1.3) and has a plurality of pivotable outlet nozzles (9) disposed adjacent one another.

2. Air outlet according to claim 1, **characterised in that** the outlet means (8) and the outlets (11 and 12) have an identical length (L).

3. Air outlet according to claim 1 or 2, **characterised in that** elements for limiting the air flow are associated with the outlet means (8) or the outlet nozzles (9).

## Revendications

1. Sortie d'air destinée à l'amenée d'air chaud et/ou froid dans un local, avec un boîtier (1, 1.1 à 1.3) réalisé allongé et pourvu, du côté frontal, d'au moins une ouverture (3, 4), auquel est associé au moins un dispositif de sortie (8) et à côté du dispositif de sortie (8) étant disposée au moins une autre sortie (11, 12),
**caractérisée par le fait que**
le dispositif de sortie (8) est placé dans une ouverture (7), s'étendant dans le sens longitudinal, du boîtier (1, 1.1 à 1.3) et présente une pluralité de buses de sortie (9) disposées juxtaposées et pivotables.

2. Sortie d'air selon la revendication 1, **caractérisée par le fait que** le dispositif de sortie (8) et les sorties (11 et 12) présentent une longueur (L) identique.

3. Sortie d'air selon la revendication 1 ou 2, **caractérisée par le fait qu'**au dispositif de sortie (8) ou aux buses de sortie (9) sont associés des éléments destinés à limiter le flux d'air.
